# EUROPÄISCHE PATENTSCHRIFT

(11) **EP 1 528 964 B1**
(45) Veröffentlichungstag und Bekanntmachung des Hinweises auf die Patenterteilung: **25.03.2009**
(21) Anmeldenummer: 03793621.8
(22) Anmeldetag: 18.07.2003
(51) Int. Cl.: B22D 11/115

(54) **ELEKTROMAGNETISCHE BREMSVORRICHTUNG FÜR IN EINE STRANGGIESSKOKILLE EINSTRÖMENDE STAHLSCHMELZE**
ELECTROMAGNETIC BRAKING DEVICE FOR MOLTEN STEEL THAT FLOWS INTO A CONTINUOUS CASTING MOULD
DISPOSITIF DE FREINAGE ELECTROMAGNETIQUE D'UNE CHARGE D'ACIER LIQUIDE S'ECOULANT DANS UNE COQUILLE DE COULEE CONTINUE

(30) Priorität: 14.08.2002 DE 10237188
(43) Veröffentlichungstag der Anmeldung: 11.05.2005
(73) Patentinhaber: SMS Demag Aktiengesellschaft, 40237 Düsseldorf (DE)
(72) Erfinder: JONEN, Peter, 47249 Duisburg (DE); RITTNER, Karl, 40723 Hilden (DE); MÜLLER, Jürgen, 41564 Kaarst (DE); STREUBEL, Hans, 40699 Erkrath (DE)
(74) Vertreter: Klüppel, Walter
(86) Internationale Anmeldenummer: PCT/EP2003/007811
(87) Internationale Veröffentlichungsnummer: WO 2004/022264

(56) Entgegenhaltungen:
- EP-A- 0 698 434
- WO-A-01/17713
- DE-A- 10 146 993

## Beschreibung

Die Erfindung betrifft eine elektromagnetische Bremsvorrichtung für in eine Stranggießkokille einströmende Stahlschmelze, umfassend mindestens eine Magnetspule mit einem den Kokillenbreitseiten **zugeordneten** ferromagnetischen Kern.

Beim Einsatz in einer Stranggießanlage mit elektromagnetischer Bremsvorrichtung wird der in die Kokille einströmende Gießstrahl zur Reduzierung von Turbulenzen durch ein zwischen den Breitseiten der Stranggießkokille wirkendes Magnetfeld abgebremst und ausgerichtet.
Zur Erzeugung des Magnetfelds sind an Kupferplatten der Breitseite der Stranggießkokille Ferromagnetkerne angebracht, die durch sie umgebende Spulen erregt werden. Die durch das Magnetfeld bewirkte Abbremsung und Ausrichtung des Gießstrahls bewirkt eine Beruhigung des Stahlbades und eine Verringerung von Turbulenzen innerhalb desselben, mit dem Ziel des gleichmäßigen Gießens von Stahlsträngen.

Bekannt sind elektromagnetische Bremsen, die in Kokillen fest integriert sind.
Nachteil bei dieser Lösung ist, dass, bedingt durch die elektromagnetische Bremse die oszillierenden Massen der Kokille erheblich erhöht werden. Zudem ist für jede Kokille eine elektromagnetische Bremse erforderlich, was hohe Investitionskosten verursacht.
Bei jedem Kokillenwechsel sind die elektrischen Verbindungen zu kuppeln bzw. zu entkuppeln, wodurch die Wechselzeiten beträchtlich erhöht werden.
Eine Verbesserung stellt die sogenannte Window-Lösung dar, bei der jedem Strang eine elektromagnetische Bremse zugeordnet ist, die beim Kokillenwechsel in der Maschine verbleibt. Für einen Kokillenwechsel wird dann die elektromagnetische Bremse aus der Kokille herausgefahren und nach erfolgtem Einbau der Kokille wieder in die Arbeitsposition eingefahren.
Damit entfällt das zeitaufwendige Kuppeln und Trennen der elektrischen Verbindungen, und die Investitionskosten werden deutlich verringert.
Nachteil dieser Window-Lösung ist jedoch, dass ein späteres Nachrüsten in einer vorhandenen Anlage nur mit einem großen Zeit- und Änderungsaufwand der Tragstruktur der Gießbühne möglich ist. Ferner ist der Platzbedarf für eine konventionelle Window-Lösung außerordentlich groß und kostenaufwendig, insbesondere bei Mehrstranganlagen.

Aus dem Dokument DE 198 07 842 A1 ist eine Stranggießanlage mit einer elektromagnetischen Bremsvorrichtung bekannt, die aus mindestens einer den Kokillenbreitseiten zugeordneten Spule mit einem ferromagnetischen Kern, sowie mindestens einem zugeordneten Joch besteht. Zumindest einzelne Teile der elektromagnetischen Bremsvorrichtung sind tragende Bestandteile der Stranggießkokille. Das von der elektromagnetischen Bremsvorrichtung erzeugte Magnetfeld ist in Bezug auf die Stranggießkokille in mindestens ein oberes und ein unteres Magnetfeld aufgeteilt. Zumindest das Innere der elektromagnetischen Kerne bildet zugleich Kühlkammern, über die Kühlwasserzufuhr und die Kühlwasserableitung erfolgen kann. Durch Integration der elektromagnetischen Bremsvorrichtung als tragender Bestandteil in die Stranggießkokille wird zwar erheblich an Gewicht eingespart, dennoch sind die oszillierenden Massen relativ hoch.

Aus einer noch nicht veröffentlichten Patentanmeldung mit dem Aktenzeichen 101 46 993.4 geht die Ausbildung einer elektromagnetischen Bremsvorrichtung hervor, die dadurch gekennzeichnet ist, dass die elektromagnetische Bremsvorrichtung, bestehend aus Joch, Spule und ferromagnetischem Kern in bzw. an die Stranggießkokille durch wenigstens ein Verstellmittel ein- bzw. ausschwenkbar ist.

In Folge der Anlenkung mittels Schwenkhebeln an die Kokille wird erreicht, dass die elektromagnetische Bremsvorrichtung nicht zusammen mit der Stranggießkokille oszillierbar ist.

Das Dokument EP 0 577 831 B1 beschreibt eine elektromagnetische Bremsvorrichtung für eine Stranggießform mit einem Elektromagneten, der Magnetpole aufweist, die an langen Seiten der Gießform mit rechteckigem Querschnitt vorgesehen sind und in gegenüberliegende Beziehung zueinander angeordnet sind. Die Magnetpole weisen eine Breite auf, die im Allgemeinen gleich der Breite der langen Seiten der Gießform ist und Spulen, die um äußere Ränder der Magnetspule gewickelt sind. Der Elektromagnet ist innerhalb des vertikalen Verlaufs der Gießform angeordnet und ein Eisenkern ist in umgebender Beziehung zur Gießform vorgesehen.

Das Dokument EP 0 820 824 A1 beschreibt eine Stranggießanlage mit einem, im Bereich der Stranggießkokille ausgebildeten Magnetfeld. Das Magnetfeld ist in Bezug auf die Stranggießkokille in mindestens ein oberes und unteres Magnetfeld aufgeteilt. Von den eingesetzten Magneten besitzt jeder Magnet einen Zentralkern, der sich kokillenseitig in mindestens einen oberen Kern für das obere Magnetfeld und einen unteren Kern für das untere Magnetfeld teilt.

Das Dokument EP 0 698 434 A1 beschreibt eine elektromagnetische Bremsvorrichtung für eine Stranggießanlage, die aus je einer den Kokillenbreitseiten zugeordneten Spule mit einem ferromagnetischen Kern sowie aus einem die Kokille umschließenden Joch besteht. Zur Schaffung einer einfachen, kostengünstigen und definiert einstellbaren Bremsvorrichtung sind die Kerne aus je einem Hauptkern und einem gießstrangseitigen Teilkern gebildet, wobei unterschiedliche Teilkerne zur Anpassung des Magnetfeldes an wechselnde Gießbedingungen wahlweise einsetzbar sind.

Das Dokument WO 01/17713 A1 beschreibt eine Stranggießanlage mit einer elektromagnetischen Bremsvorrichtung, umfassend wenigstens zwei Magnetkerne, angeordnet an jeder Seite einer Gießform und damit verbunden; ferner ein Joch, abnehmbar verbunden mit den beiden Magnetkernen und mit diesen in gegenseitiger Verbindung. Das Joch trägt zumindest eine Spule, angeordnet zwischen den Magnetkernen und verbunden durch das Joch.

Ausgehend vom vorgenannten Stand der Technik liegt der Erfindung die Aufgabe zugrunde, eine möglichst unkomplizierte Ausführung einer elektromagnetischen Bremsvorrichtung anzugeben, durch welche eine Möglichkeit geschaffen wird, die oszillierenden Massen der Kokille einschließlich der Bremsvorrichtung zu verringern und insbesondere unkomplizierte Mittel zur Lenkung und Beeinflussung des aktiven Magnetfeldes vorzusehen und damit die Magnetfeldstärke bei gleicher installierter Leistung beträchtlich zu erhöhen.

Zur Lösung der Aufgabe wird mit der Erfindung bei einer elektromagnetischen Bremsvorrichtung der im Oberbegriff von Anspruch 1 genannten Art vorgeschlagen, dass der Kern einerseits aus einem die Magnetspule aufnehmenden, im Abstand zu den Breitseitenwänden **mittels einer Verfahreinheit** verfahrbaren **und von der Oszillation abgekoppelten** Hauptteil, und andererseits aus in Wasserkästen der Kokille fest angeordneten Zusatzteilen besteht, wobei die Kernteile im zusammengefahrener Betriebsposition U-förmige Joche zur Ausbildung eines geschlossenen Magnetflusses, und in auseinandergefahrener Position eine Unterbrechung des Magnetflusses ergeben.

Bei dieser Bauart gelingt es problemlos, die Magnetspule und den verfahrbaren Hauptteil des Kernes bedarfsweise auszuwechseln, um die Wirkung der elektromagnetischen Bremsvorrichtung an gegebene Gießverhältnisse problemlos anzupassen.

Eine Ausgestaltung der Erfindung sieht vor, dass den Jochen die in Wasserkästen angeordneten ferromagnetischen Zusatzteile des Kerns **zugeordnet** sind.

Eine weitere Ausgestaltung der elektromagnetischen Bremsvorrichtung sieht vor, dass die Breitseitenwände an den den Wasserkästen zugewandten Seitenflächen mit vertikal verlaufenden Ausnehmungen ausgebildet sind, in welche ferromagnetische Füllstücke **eingepaßt** sind. Dabei können die Füllstücke in Länge oder Breite und/oder Tiefe variabel sein. Damit wird eine problemlose Anpassung der elektromagnetischen Feldstärke an vorhandene Stranggießbedingungen mit graduellen Abstufungen erreicht.

Auf einfache Weise kann der Hauptteil des Kerns mit der Magnetspule in Führungen mittels eines Hydraulikantriebes oder Elektroantriebes in Richtung senkrecht zu den Breitseitenwänden verfahren werden.

Eine weitere sehr vorteilhafte Ausgestaltung der erfindungsgemäßen Bauart ergibt sich dadurch, dass einerseits der verfahrbare Teilkern mit seinem Hauptteil und der Magnetspule, Verfahreinheit und Führungen sowie andererseits die in Wasserkästen der Kokille fest angeordneten, insbesondere eingeschweißen Zusatz-Kernteile an ihren Kontaktstellen keine feste mechanische Verbindung ausbilden sondern dass sie durch-Magnetkräfte zusammengehalten sind. Damit gelingt es, die oszillierbaren und nicht oszillierbaren Massen der Vorrichtung im Betrieb voneinander zu trennen.

Dabei können dann mit Vorteil die Kontaktstellen als Gleit- oder Rollenlager ausgebildet sein, deren den Wasserkästen zugeordneten Teile zusammen mit diesen mit der Kokille in Oszillation erregt werden, während die dem Hauptteil des Kernes sowie der Magnetspule zugeordneten Teile einschließlich der Verfahreinheit und Führungen von der Oszillation abgekoppelt sind. Für eine wesentliche Verbesserung des Betriebsverhaltens kann im Bereich der Kontaktstellen die Gleitreibung eines Gleitlagers durch eine Gleitschicht, insbesondere ein Luftkissen, wenigstens größtenteils aufgehoben sein.
Das Luftkissen kann durch Einleiten von Druckluft problemlos in den zentralen Bereich der Kontaktstellen aufrechterhalten werden.

Weitere Einzelheiten, Merkmale und Vorteile der Erfindung ergeben sich aus der nachstehenden Erläuterung eines in den Zeichnungen schematisch dargestellten Ausführungsbeispieles.

Es zeigen:
- Fig. 1: in Draufsicht eine Kokille zum Stranggießen mit elektromagnetischer Bremsvorrichtung;
- Fig. 2: die Kokille mit Bremsvorrichtung gem. Fig. 1 mit etwas geänderten Dimensionen.

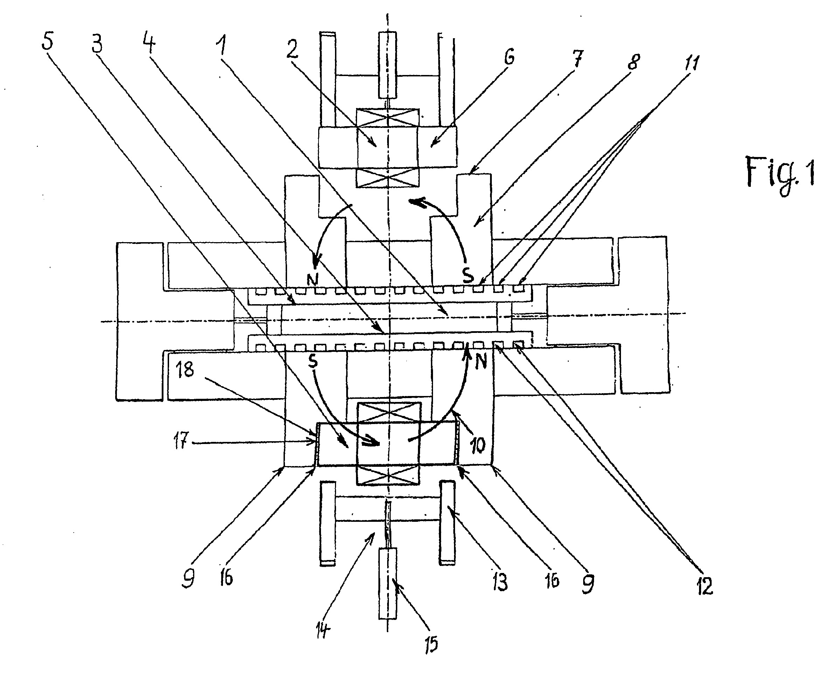

Fig. 1 zeigt eine elektromagnetische Bremsvorrichtung für in eine Stranggießkokille 1 einströmende Stahlschmelze, umfassend mindestens eine Magnetspule 2 mit einem den Kokillenbreitseiten 3, 4 zuordenbaren ferromagnetischen Kern 5.
Der Kern 5 besteht einerseits aus einem die Magnetspule 2 aufnehmenden, im Abstand zu den Breitseitenwänden 3, 4 verfahrbaren Hauptteil 6 und andererseits aus in Wasserkästen 7, 7' der Kokille 1 fest angeordneten Zusatzteilen 8, 8', wobei die Teile 6, 8 in zusammengefahrener Betriebsposition U-förmige Joche 9, 9' zur Ausbildung eines geschlossenen Magnetflusses 10 ergeben, und in auseinander gefahrener Position, wie dies in der oberen Hälfte der Fig. 1 dargestellt ist, eine Unterbrechung des Magnetflusses 10 bewirken.

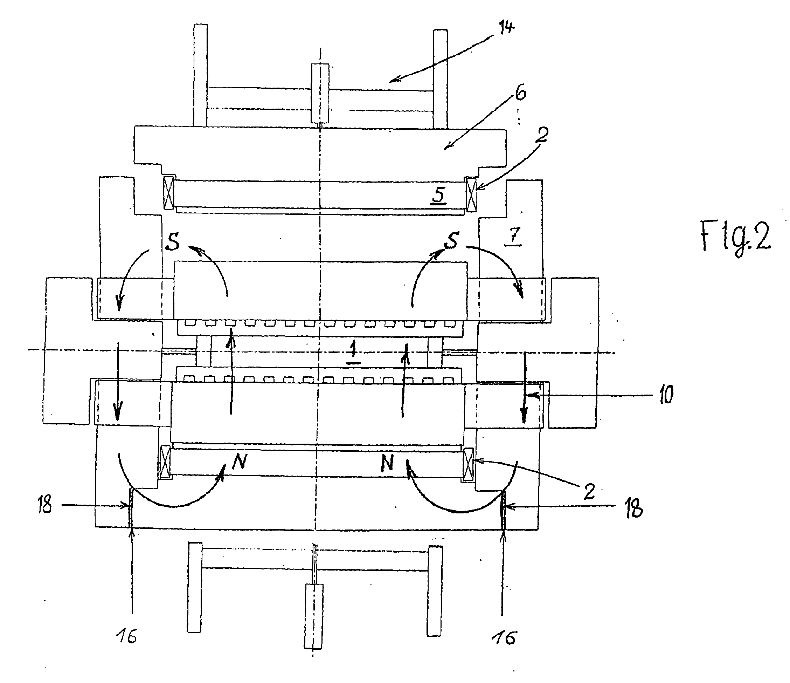

Fig. 2 zeigt, dass den Jochen 9, 9' die in Wasserkästen 7, 7' angeordneten ferromagnetischen Zusatzteile 8, 8' des Kerns 5 zuordenbar sind.

Bei der elektromagnetischen Bremsvorrichtung sind die Breitseitenwände 3, 4 an den den Wasserkästen 7, 7' zugewandten Seitenflächen mit vertikal verlaufenden Ausnehmungen 11, 11' ausgebildet, in welche ferromagnetische Füllstücke 12, 12' einpassbar sind. Diese Füllstücke 12, 12' können in Länge oder Breite und/oder Tiefe variabel sein, wenn die Feldstärke des Magnetfeldes an übliche Betriebsparameter des Gießvorganges der Kokille angepasst werden soll.

Der Hauptteil 6 des Kerns 5 mit der Magnetspule 2 ist in Führungen 13, 13' mittels eines Hydraulikantriebes 15 oder Elektroantriebes 14 in Richtung senkrecht zu den Breitseitenwänden 3, 4 der Kokille 1 verfahrbar. Damit kann erreicht werden, dass Magnetspule 2 und Magnetkern 5 problemlos ausgetauscht werden können und damit an die aktuellen Betriebsverhältnisse mit geringem Aufwand an Kosten und Arbeitszeit anpassbar sind.

Eine erfindungswesentliche Ausgestaltung der Vorrichtung mit Kokille und Bremsvorrichtung sieht vor, dass einerseits der verfahrbare Teilkern mit seinem Hauptteil 6 und der Magnetspule 2, Verfahreinheit 14 und Führungen 13, sowie andererseits die in Wasserkästen 7, 7' der Kokille 1 fest angeordneten, insbesondere eingeschweißten Zusatz-Kernteile 8, 8' an ihren Kontaktstellen 16, 16' keine feste mechanische Verbindung ausbilden sondern dass sie durch Magnetkräfte zusammengehalten sind. Die Kontaktstellen 16, 16' sind als Gleit- oder Rollenlager 17, 17' ausgebildet sind, deren den Wasserkästen 7, 7' zugeordneten Teile 8, 8' zusammen mit diesen mit der Kokille 1 in Oszillation erregt werden, während die dem Hauptteil 6 des Kernes 5 sowie der Magnetspule 2 zugeordnete Teile einschließlich der Verfahreinheit 14 und Führungen 13 von der Oszillation abgekoppelt sind. Dabei wird der für die Oszillation benötigte Kraftaufwand von der Belastung durch mitschwingende Zusatzlasten der Bremsvorrichtung freigesetzt.
Im Bereich der Kontaktstellen 16, 16' ist die Gleitreibung eines Gleitlagers 17, 17' durch eine Gleitschicht 18, 18', insbesondere ein Luftkissen, wenigstens größtenteils aufgehoben. Dabei kann das Luftkissen durch Einleiten von Druckluft in den zentralen Bereich der Kontaktstellen 16, 16' auf einfache und zuverlässige Weise aufrecht erhalten sein.

### Liste der Bezugszeichen

- 1.: Kokille
- 2.: Magnetspule
- 3.: Kokillenbreitseite
- 4.: Kokillenbreitseite
- 5.: Kern
- 6.: Hauptteil des Kerns
- 7.: Wasserkasten
- 8.: Zusatzteile des Kerns
- 9.: Joch
- 10.: Magnetfluss
- 11.: Ausnehmungen
- 12.: Füllstücke
- 13.: Führungen
- 14.: Antriebe des Kerns / Verfahreinheit
- 15.: Hydraulikzylinder
- 16.: Kontaktstelle
- 17.: Gleitlager / Rollenlager
- 18.: Gleitschicht

## Patentansprüche

1. Elektromagnetische Bremsvorrichtung für in eine Stranggießkokille (1) einströmende Stahlschmelze, umfassend mindestens eine Magnetspule (2) mit einem den Kokillenbreitseiten (3, 4) zugeordneten ferromagnetischen Kern (5),
**dadurch gekennzeichnet,**
**dass** der Kern (5) einerseits aus einem die Magnetspule (2) aufnehmenden, im Abstand zu den Breitseitenwänden (3, 4) mittels einer Verfahreinheit (14) verfahrbaren und von der Oszillation abgekoppelten Hauptteil (6), und andererseits aus in Wasserkästen (7, 7') der Kokille (1) fest angeordneten Zusatzteilen (8, 8') besteht, wobei die Kernteile (6, 8) in zusammengefahrener Betriebsposition U-förmige Joche (9, 9') zur Ausbildung eines geschlossenen Magnetflusses (10), und in auseinandergefahrener Position eine Unterbrechung des Magnetflusses (10) ergeben.

2. Bremsvorrichtung nach Anspruch 1,
**dadurch gekennzeichnet,**
**dass** den Jochen (9, 9') die in Wasserkästen (7, 7') angeordneten ferromagnetischen Zusatzteile (8, 8') des Kerns (5) zugeordnet sind.

3. Bremsvorrichtung nach Anspruch 1 oder 2,
**dadurch gekennzeichnet,**
**dass** die Breitseitenwände (3, 4) an den den Wasserkästen (7, 7') zugewandten Seitenflächen mit vertikal verlaufenden Ausnehmungen (11, 11') ausgebildet sind, in welche ferromagnetische Füllstücke (12, 12') **eingepaßt** sind.

4. Bremsvorrichtung nach einem oder mehreren der Ansprüche 1 bis 3,
**dadurch gekennzeichnet,**
**dass** der Hauptteil (6) des Kerns (5) mit der Magnetspule (2) in Führungen (13, 13') mittels eines Hydraulikantriebes oder Elektroantriebes (14) in Richtung senkrecht zu den Breitseitenwänden (3, 4) verfahrbar ist.

5. Bremsvorrichtung nach einem oder mehreren der Ansprüche 1 bis 4,
**dadurch gekennzeichnet,**
**dass** die Füllstücke (12, 12') in Länge oder Breite und/oder Tiefe variabel sind.

6. Bremsvorrichtung nach einem oder mehreren der Ansprüche 1 bis 5,
**dadurch gekennzeichnet,**
**dass** einerseits der verfahrbare Teilkern mit seinem Hauptteil (6) und der Magnetspule (2), Verfahreinheit (14) und Führungen (13) sowie andererseits die in Wasserkästen (7, 7') der Kokille (1) fest angeordneten, insbesondere eingeschweißten Zusatz-Kernteile (8, 8') an ihren Kontaktstellen (16, 16') keine feste mechanische Verbindung ausbilden, sondern dass sie durch Magnetkräfte zusammengehalten sind.

7. Bremsvorrichtung nach einem oder mehreren der Ansprüche 1 bis 6,
**dadurch gekennzeichnet,**
**dass** die Kontaktstellen (16, 16') als Gleit- oder Rollenlager (17, 17') ausgebildet sind, deren den Wasserkästen (7, 7') zugeordneten Teile (18, 18') zusammen mit diesen mit der Kokille (1) in Oszillation erregt werden, während die dem Hauptteil (6) des Kernes sowie der Magnetspule (2) zugeordneten Teile einschließlich der Verfahreinheit (14) und Führungen (13) von der Oszillation abgekoppelt sind.

8. Bremsvorrichtung nach einem oder mehreren der Ansprüche 1 bis 7,
**dadurch gekennzeichnet,**
**dass** im Bereich der Kontaktstellen (16, 16') die Gleitreibung eines Gleitlagers (17, 17') durch eine Gleitschicht (18, 18'), insbesondere ein Luftkissen, wenigstens größtenteils aufgehoben ist.

9. Bremsvorrichtung nach Anspruch 8,
**dadurch gekennzeichnet,**
**dass** das Luftkissen durch Einleiten von Druckluft in den zentralen Bereich der Kontaktstellen (16, 16') aufrecht erhalten ist.

## Claims

1. Electromagnetic braking device for steel melt flowing into a continuous casting mould (1), comprising at least one magnet coil (2) with a ferromagnetic core (5) associated with the mould wide sides (3, 4), **characterised in that** the core (5) consists on the one hand of a primary part (6), which receives the magnet coil (2) and which is movable at a spacing from the wide side walls (3, 4) by means of a displacing unit (14) and is decoupled from the oscillation, and on the other hand of auxiliary parts (8, 8') fixedly arranged in water tanks (7, 7') of the mould (1), wherein the core parts (6, 8) in moved-together operating position provide U-shaped yokes (9, 9') for forming a closed magnetic flux (10) and in moved-apart position provide an interruption of the magnetic flux (10).

2. Braking device according to claim 1, **characterised in that** the ferrromagnetic auxiliary parts (8, 8'), which are arranged in water tanks (7, 7') of the core (5) are associated with the yokes (9, 9').

3. Braking device according to claim 1 or 2, **characterised in that** the wide side walls (3, 4) are formed at the side surfaces, which face the water tanks (7, 7'), with vertically extending recesses (11, 11') into which ferromagnetic filler members (12, 12') are fitted.

4. Braking device according to one or more of claims 1 to 3, **characterised in that** the primary part (6) of the core (5) is movable together with the magnet coil (2) in guides (13, 13') by means of a hydraulic drive or an electric drive (14) in a direction perpendicular to the wide side walls (3, 4).

5. Braking device according to one or more of claims 1 to 4, **characterised in that** the filler members (12, 12') are variable in length or width and/or depth.

6. Braking device according to one or more of claims 1 to 5, **characterised in that** on the one hand the movable part core with its primary part (6) and the magnet coil (2), displacing unit (14) and guides (13) and on the other hand the auxiliary core parts (8, 8'), which are fixedly arranged, particularly welded in place, in water tanks (7, 7') of the mould (1), do not form a fixed mechanical connection at the contact points (16, 16') thereof, but they are held together by magnetic forces.

7. Braking device according to one or more of claims 1 to 6, **characterised in that** the contact points (16, 16') are formed as slide or roller bearings (17, 17'), the parts (18, 18') - which are associated with the water tanks (7, 7') - of which are together with these excited into oscillation together with the mould (1), whilst the parts, which are associated with the primary part (6) of the core as well as the magnet coil (2), inclusive of the displacing unit (14) and guides (13) are decoupled from the oscillation.

8. Braking device according to one or more of claims 1 to 7, **characterised in that** in the region of the contact points (16, 16') the sliding friction of a slide bearing (17, 17') is eliminated at least for the major part by a slide layer (18, 18'), particularly an air cushion.

9. Braking device according to claim 8, **characterised in that** the air cushion is maintained by introduction of compressed air into the central region of the contact points (16, 16').

## Revendications

1. Dispositif de freinage électromagnétique d'une charge d'acier liquide (1) s'écoulant dans une lingotière de coulée continue, comprenant au moins une bobine d'électroaimant (2) avec un noyau ferromagnétique (5) associé aux côtés larges de la lingotière (3, 4),
**caractérisé en ce que**,
le noyau (5) consiste d'une part dans une partie principale (6) réceptionnant la bobine d'électroaimant (2) déplaçable avec un écart par rapport aux parois des côtés larges (3, 4) au moyen d'une unité de déplacement (14) et désaccouplée des oscillations et d'autre part, dans des parties auxiliaires (8, 8') fixement disposées dans des boîtes à eau (7, 7') de la lingotière (1), les parties du noyau (6, 8) donnant lieu en position de service rapprochée à des culasses en forme de U (9, 9') pour la création d'un flux magnétique fermé (10), et donnant lieu en position écartée à une interruption du flux magnétique (10).

2. Dispositif de freinage selon la revendication 1,
**caractérisé en ce que**,
les parties auxiliaires ferromagnétiques (8, 8') du noyau (5) disposées dans des boîtes à eau (7, 7') sont associées aux culasses.

3. Dispositif de freinage selon la revendication 1 ou 2,
**caractérisé en ce que**,
sur les surfaces latérales faisant face aux boîtes à eau (7, 7'), les parois des côtés larges (3, 4) sont réalisées avec des évidements (11, 11') s'étendant à la verticale, dans lesquels des pièces intercalaires ferromagnétiques (12, 12') sont ajustées.

4. Dispositif de freinage selon l'une ou plusieurs des revendications 1 à 3, **caractérisé en ce que**,
la partie principale (6) du noyau (5) est déplaçable avec la bobine d'électroaimant (2) dans des guidages (13, 13') au moyen d'un entraînement hydraulique ou d'un entraînement électrique (14) dans la direction à la perpendiculaire des parois des côtés larges (3, 4).

5. Dispositif selon l'une ou plusieurs des revendications 1 à 4,
**caractérisé en ce que**,
les pièces intercalaires (12, 12') sont variables en longueur ou en largeur et/ou en profondeur.

6. Dispositif de freinage selon l'une ou plusieurs des revendications 1 à 5, **caractérisé en ce que**,
d'une part le noyau partiel déplaçable avec sa partie principale (6) et la bobine d'électroaimant (2), l'unité de déplacement (14) et les guidages (13) ainsi que d'autre part les parties auxiliaires du noyau (8, 8') fixement disposées, notamment insérées par soudage dans des boîtes à eau (7, 7') de la lingotière (1) ne forment sur leur point de contact (16, 16') aucune liaison mécanique fixe, mais **en ce qu'**ils sont maintenus ensemble par des forces magnétiques.

7. Dispositif de freinage selon l'une ou plusieurs des revendications 1 à 6, **caractérisé en ce que**,
les points de contact (16, 16') sont conçus sous la forme de paliers lisses ou de paliers à rouleaux (17, 17') dont les parties (18, 18') associées aux boîtes à eau sont excitées en oscillation, ensemble avec celles de la lingotière (1) alors que les parties associées à la partie principale (6) ainsi qu'à la bobine d'électroaimant (2), y compris l'unité de déplacement (14) et les guidages (13) sont désaccouplées de l'oscillation.

8. Dispositif de freinage selon l'une ou plusieurs des revendications 1 à 7, **caractérisé en ce que**,
dans la zone des points de contact (16, 16'), la friction de glissement d'un palier lisse (17, 17') est annulée au moins en majeure partie par une couche de glissement (18, 18'), notamment un coussin d'air.

9. Dispositif de freinage selon la revendication 8,
**caractérisé en ce que**,
par introduction d'air comprimé dans la zone centrale des points de contact (16, 16'), le coussin d'air est maintenu debout.
